# EUROPÄISCHE PATENTSCHRIFT

(11) **EP 2 285 624 B1**
(45) Veröffentlichungstag und Bekanntmachung des Hinweises auf die Patenterteilung: **21.09.2011**
(21) Anmeldenummer: 09741740.6
(22) Anmeldetag: 05.05.2009
(51) Int. Cl.: B60R 11/02

(54) **HALTERUNG**
MOUNTING
SUPPORT

(30) Priorität: 09.05.2008 DE 102008023083; 08.08.2008 DE 102008036983; 26.03.2009 DE 102009014412
(43) Veröffentlichungstag der Anmeldung: 23.02.2011
(73) Patentinhaber: Tormaxx GmbH, 41199 Mönchengladbach (DE)
(72) Erfinder: KOCH, Hubert, 41199 Mönchengladbach (DE)
(74) Vertreter: Liermann - Castell
(86) Internationale Anmeldenummer: PCT/DE2009/000601
(87) Internationale Veröffentlichungsnummer: WO 2009/135467

(56) Entgegenhaltungen:
- EP-A1- 1 881 257
- WO-A1-2006/126818
- US-A- 5 779 205

## Beschreibung

Die Erfindung betrifft eine Halterung, insbesondere zur Befestigung in einem Kraftfahrzeug, mit einem Stützarm, an deren einem Ende ein Saugelement (2) angeordnet ist und an deren anderem Ende ein Reibelement (8) angeordnet ist.

In einem Kraftfahrzeug entsteht häufig das Problem, zusätzliche Einrichtungen wie Computer, Displays und andere Gegenstände des täglichen Bedarfs sicher im Fahrgastraum zu befestigen. Beim Fahren und Bremsen entstehen Beschleunigungen, die die Halterung aus ihrer Befestigung reißen können und daher sind besondere Anforderungen an derartige Halterungen gestellt. Darüber hinaus wäre es vorteilhaft eine Halterung vorzustellen, die in unterschiedlichen Fahrzeugen angewendet werden kann. Letztlich sollte diese Halterung einfach anbringbar sein, ohne wesentliche Änderungen im Fahrgastraum des Fahrzeugs vornehmen zu müssen.

Eine gattungsgemäße Halterung ist aus der US 5 779 205 A bekannt. Bei dieser Halterung muss jedoch die Länge genau fixiert werden und, wenn sich die Einrichtung lockern sollte, muss die Länge neu eingestellt werden. Das gleiche Problem besteht bei einer Einrichtung gemäß der WO 2006/126818 A1.

Daraus leitet sich die Aufgabe der Erfindung ab, eine Halterung vorzuschlagen, die einfach und sicher in unterschiedlichen Kraftfahrzeugen angebracht werden kann.

Diese Aufgabe wird mit einer Halterung gelöst, bei der der Stützarm als Teleskopstange ausgebildet ist, die mindest eine Gasdruckfeder aufweist.

Das Saugelement ermöglicht es, die Halterung auf einfach Art und Weise an der Innenseite der Windschutzscheibe zu befestigen. Die Teleskopstange ermöglicht es, die Halterung auf eine Länge einzustellen, die dem Abstand zwischen Windschutzscheibe und Bodenbereich des Kraftfahrzeugs entspricht. Im Bodenbereich des Kraftfahrzeugs hat die Halterung ein Reibelement, mit dem die Halterung auf einfache Art und Weise am Bodenbelag des Kraftfahrzeugs befestigt werden kann.

Dadurch wird es möglich, auf einfache Art und Weise die Halterung an der Windschutzscheibe mit dem Saugelement zu befestigen und die Teleskopstange so weit auszufahren, dass diese sich im Boden verankert.

Überraschenderweise haben Versuche gezeigt, dass derartige Halterungen eine ausreichende Festigkeit besitzen, um auch bei Crashtests mit Kraftfahrzeugen beispielsweise einen Computer sicher im Kraftfahrzeug zu halten. Hierzu wind der Computer, ein Gehäuse oder eine für den Computer ausgebildete Ablagefläche an der Teleskopstange befestigt, die dadurch als Halterung für den Computer dient.

Dabei wird das Anbringen der Halterung im Inneren eines Kraftfahrzeugs dadurch erleichtert, dass die Teleskopstange mindestens eine Gasdruckfeder aufweist. Die Halterung kann in einem Zustand mit gespannter Gasdruckfeder transportiert werden und im Kraftfahrzeug angebracht werden. Durch Lösen einer Arretierung an der Gasdruckfeder verlängert sich die Teleskopstange solange, bis das Reibelement am Fahrzeugboden anliegt. Die Gasdruckfeder fährt eine entriegelte Teleskopstange in ihre maximale Länge aus. Die Länge der Teleskopstange ist dabei so bemessen, dass die Halterung im Inneren eines Kraftfahrzeugs das Reibelement an den Boden des Kraftfahrzeugs presst bevor die maximale Länge der Teleskopstange erreicht ist. Dies ermöglicht es, die Gasdruckfeder mit einem besonderen Anpressdruck herzustellen, der besonders gut für die Befestigung der Halterung im Inneren eines Kraftfahrzeugs geeignet ist.

Vorteilhaft ist es, wenn die Gasdruckfeder eine definierte Kraft aufbringt, mit der das Reibelement an den Fahrzeugboden gepresst wird.

Vorteilhaft ist es, wenn das Saugelement mindestens einen Saugnapf aufweist. Derartige Saugnäpfe werden beispielsweise für den Transport von Fensterscheiben verwendet. Im vorliegenden Fall ist es günstig zwei sich gegenüberliegende Saugnäpfe zu verwenden. Je nach Anforderung und Qualität des Saugnapfes können jedoch auch beispielsweise vier Saugnäpfe verwendet werden. Besonders vorteilhaft ist es, wenn der Saugnapf einen Bedienhebel aufweist, der es erleichtert, auf bekannte Art und Weise den Saugnapf an einer glatten Fläche zu befestigen.

Um eine einfache und reversible Möglichkeit der Befestigung der Alterung an einem Boden eines Kraftfahrzeugs zu ermöglichen, wird vorgeschlagen, dass das Reibelement mindestens eine Nadel aufweist. Vorteilhaft ist ein Nadelkissen, mit dem das am unteren Ende der Teleskopstange befestigte Reibelement auf einfache Art und Weise an einer textilen Oberfläche eines Kraftfahrzeugbodens zu befestigen ist.

Um Stöße abzufangen und schräge Flächen auszugleichen, wird vorgeschlagen, dass zwischen einem Saugnapf des Sauelementes und der Teleskopstange ein Gummielement angeordnet ist.

Insbesondere um mehrere Saugnäpfe mit der Teleskopstange zu verbinden und um eine relative Beweglichkeit zwischen den Saugnäpfen und der Teleskopstange zu ermöglichen, wird vorgeschlagen, dass zwischen einem Saugnapf des Saugelements und der Teleskopstange eine Verbindungsstange angeordnet ist.

Diese Verbindungsstange kann auf einfache Art und Weise gelenkig mit der Teleskopstange verbunden sein. Daher wird weiterbildend vorgeschlagen, dass die Verbindungsstange drehbeweglich an der Teleskopstange angeordnet ist.

Eine vorteilhafte Ausführungsvariante sieht vor, dass die Teleskopstange eine Verriegelungseinrichtung zur Begrenzung ihrer Länge aufweist. Diese Verriegelungseinrichtung kann einerseits die auf minimale Länge zusammen geschobene Teleskopstange in dieser Position halten. Andererseits sind jedoch auch Verriegelungseinrichtungen möglich, die die Teleskopstange in einer speziellen Länge fixieren.

Zum Ausgleich von Schwingungen, Toleranzen und Unebenheiten wird vorgeschlagen, dass zwischen der Teleskopstange und dem Reibelement ein Gummielement angeordnet ist. Dieses Gummielement ist vorzugsweise als um die Teleskopstange gelegter Ring ausgebildet.

Für die praktische Verwendung ist es vorteilhaft, wenn das Reibelement einen vor den Nadeln angeordneten Fingerschutz aufweist. Verständlicherweise kann mit einem mit Nadeln versehenen Reibelement der Innenraum eines Kraftfahrzeugs verkratzt werden. Daher wird vorzugsweise eine Platte mit einer Vielzahl an Bohrungen vorgesehen, die derart vor den Nadeln angeordnet ist, dass durch die Nadeln keine Verletzungsgefahr entsteht und dass die Nadeln in der Anwendung der Halterung bei der Befestigung der Halterung im Kraftfahrzeug sich durch die Platte hindurch erstrecken können, um die Halterung im Boden des Kraftfahrzeugs zu verankern.

Dies wird auf einfache Art und Weise dadurch erreicht, dass die Position des Fingerschutzes relativ zu den Nadeln veränderbar ist. Der Fingerschutz kann beispielsweise auch entgegen der Kraft einer Feder zu den Nadeln gedrückt werden, sodass sich die Nadeln durch den Fingerschutz hindurch erstrecken und im entlasteten Zustand der Fingerschutz schützend vor den Nadeln angeordnet ist.

Ein Ausführungsbeispiel einer Halterung ist in der Zeichnung dargestellt und wird im folgenden näher erläutert. Es zeigt
- Figur 1: schematisch einen Schnitt durch eine Halterung und
- Figur 2: schematisch einen Ausschnitt aus Figur 1 in einer seitlichen Ansicht.

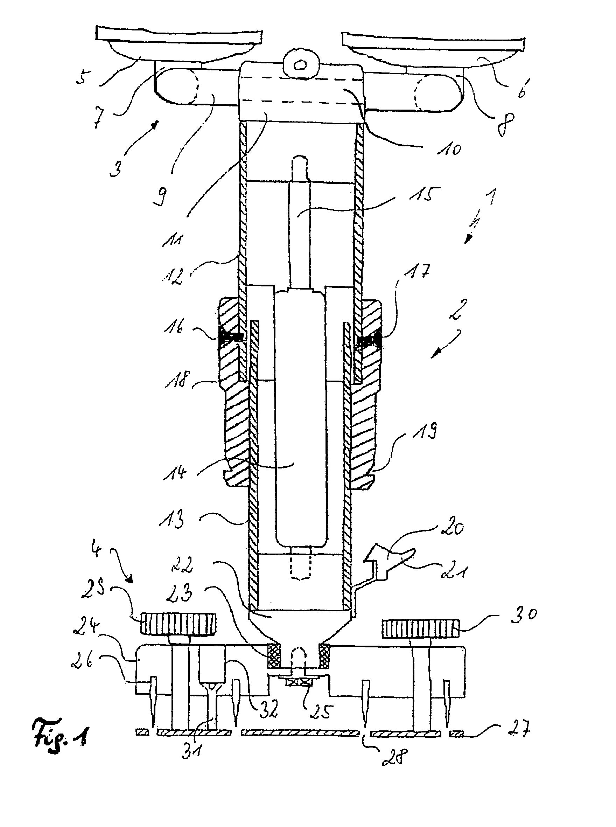

Die Figur 1 zeigt eine Halterung 1, die im Wesentlichen aus Teleskopstange 2 einem Saugelement 3 und einem Reibelement 4 besteht.

Das Saugelement 3 weist zwei nebeneinander angeordnete Saugnäpfe 5 und 6 auf, die jeweils über ein Gummielement 7, 8 mit einer Verbindungsstange 9 verbunden sind.

Die Verbindungsstange 9 ist drehbeweglich am oberen Ende 10 der Teleskopstange 2 befestigt. Als Verbindungsstange dient eine taillierte Stange, die derart mit der Teleskopstange 2 verbunden ist, dass Kräfte von den Saugnäpfen 5, 6 auf die Teleskopstange 2 übertragen werden können. Hierzu dient ein Gabelkopf mit einem Sicherungselement (nicht gezeigt) für die Verbindungsstange.

Die Teleskopstange weist zwei teleskopierbar ineinander gesetzte Aluminiumrohre 12, 13 auf, innerhalb denen eine Gasdruckfeder 14 mit einer Kolbenstange 15 angeordnet ist. Die Gasdruckfeder 14 und die Kolbenstange 15 wirken derart miteinander, dass mit ihnen die Aluminiumrohre 12 und 13 mit einer definierten Kraft auseinander bewegt werden.

Am äußeren Aluminiumrohr 12 ist mit Schrauben 16, 17 ein Führungselement 18 angeordnet, das sich um das innere Aluminiumrohr 13 herum erstreckt. Dieses Fültrungselement 18 hat an seinem unteren Ende eine umlaufende Nut 19, die als Verriegelungshaken dient.

Am unteren Ende der inneren Aluminiumstange 13 ist ein Verriegelungshaken 20 derart angeordnet, dass er bei ineinander geschobenen Aluminiumrohren 12 und 13 mit der Nut 19 zusammenwirkt und dort einrastet.

Zum Lösen der Verriegelung hat der Verriegelungshaken 20 einen Griff 21, der den Verriegelungshaken 20 aus der Nut 19 löst, sodass durch den Druck der Gasdruckfeder 14 auf die Kolbenstange 15 und das äußere Aluminiumrohr 12 die Teleskopstange sich verlängert.

Am unteren Ende des inneren Aluminiumrohres 13 ist der untere Rohrabschluss 22 über ein Gummielement 23 mit einer Halteplatte 24 verbunden. Hierzu presst eine Schraube 25 die Halteplatte 24 gegen den Rohrabschluss 22.

In der Halteplatte 24 sind 36 Nadeln 26 aufgenommen, deren Spitzen nach unten weisen. Die Halteplatte 24 wirkt daher als beweglich gelagerter Teller mit einer Vielzahl an Nadeln, der am unteren Ende der Teleskopstange befestigt ist.

Um eine Verletzung mit den Nadeln 26 zu vermeiden, ist im Bereich der Spitzen der Nadeln 26 ein Fingerschutz 27 als Lochplatte angeordnet. Dieser Fingerschutz 27 ist entgegen Federn (nicht gezeigt) gegen die Halteplatte 24 pressbar, sodass die Nadeln 26 durch Öffnungen 28 der Platte 27 heraustreten. Die Position des Fingerschutzes 27 relativ zur Halteplatte 24 ist über Rädelschrauben 29, 30 einstellbar und der Führung des Fingerschutzes 27 relativ zur Halteplatte 24 dienen Stifte 31, die in einem Sackloch 32 geführt sind.

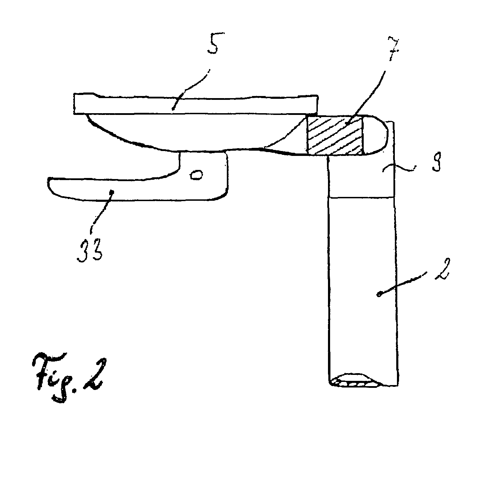

Die Figur 2 zeigt wie ein Saugnapf 5 über das Gummielement 7 mit der Verbindungsstange 9 und der Teleskopstange 2 in Verbindung steht, während mit einem Bedienhebel 33 der Saugnapf 5 gespannt werden kann.

Bei der Verwendung der Halterung 1 wird diese zunächst mit dem Bedienhebel 3 und den Saunäpfen 5, 6 an der Innenseite der Windschutzscheibe eines Kraftfahrzeuges befestigt. Anschließend wird der Verriegelungshaken 20 gelöst, sodass sich die Teleskopstange durch den Druck der Gasdruckfeder 14 auf ihre maximale Länge ausdehnt. Diese maximale Länge ist derart bemessen, dass die Platte des Fingerschutzes 27 mit einer Gummierung im Bodenraum des Kraftfahrzeugs zur Anlage kommt. Durch Lösung der Rädelschrauben 29 und 30 wird die Halteplatte 24 mit den Nadeln 26 derart an den Bodenbelag des Kraftfahrzeugs gepresst, dass die Nadeln 26 sich in dem filzartigen textilen Belag am Boden des Kraftfahrzeugs verankern.

Wenn hierdurch die Halterung 1 stabil im Kraftfahrzeug befestigt ist, kann an beliebiger Position der Teleskopstange eine Einrichtung wie eine Computerhalterung oder eine Anzeigeeinrichtung befestigt werden.

## Patentansprüche

1. Halterung (1), insbesondere zur Befestigung in einem Kraftfahrzeug, mit einem Stützarm, an deren einem Ende ein Saugelement (3) angeordnet ist und an deren anderem Ende ein Reibelement (4) angeordnet ist, ***dadurch gekennzeichnet, dass*** der Stützarm als Teleskopstange (2) ausgebildet ist, die mindest eine Gasdruckfeder (14) aufweist.

2. Halterung nach Anspruch 1, ***dadurch gekennzeichnet, dass*** das Saugelement (3) mindestens einen Saugnapf (5, 6) aufweist.

3. Halterung nach Anspruch 1 oder 2, ***dadurch gekennzeichnet, dass*** das Reibelement (4) mindestens eine Nadel (26) aufweist.

4. Halterung nach Anspruch 2, ***dadurch gekennzeichnet, dass*** zwischen einem Saugnapf (5, 6) des Saugelementes (3) und der Teleskopstange (2) ein Gummielement (7, 8) angeordnet ist.

5. Halterung nach Anspruch 2, ***dadurch gekennzeichnet, dass*** zwischen einem Saugnapf (5, 6) des Saugelementes (3) und der Teleskopstange (2) eine Verbindungsstange (9) angeordnet ist.

6. Halterung nach Anspruch 5, ***dadurch gekennzeichnet, dass*** die Verbindungsstange (9) drehbeweglich an der Teleskopstange (2 ) angeordnet ist.

7. Halterung nach einem der vorhergehenden Ansprüche, ***dadurch gekennzeichnet, dass*** Teleskopstange (2) eine Verriegelungseinrichtung (20) zur Begrenzung ihrer Länge aufweist.

8. Halterung nach einem der vorhergehenden Ansprüche, ***dadurch gekennzeichnet, dass*** zwischen der Teleskopstange (2) und dem Reibelement (4) ein Gummielement (23) angeordnet ist.

9. Halterung nach einem der vorhergehenden Ansprüche, ***dadurch gekennzeichnet, dass*** das Reibelement (4) einen vor Nadeln (26) angeordneten Fingerschutz (27) aufweiset.

10. Halterung nach Anspruch 9, ***dadurch gekennzeichnet, dass*** die Position des Fingerschutzes (27) relativ zu den Nadeln (26) veränderbar ist.

## Claims

1. A mounting (1), more specifically for fastening in a motor vehicle, with a support arm at one end of which a suction element (3) is disposed and at the other end of which a friction element (4) is disposed, ***characterized in that*** the support arm is configured as a telescopic rod (2) which has at least one gas spring (14).

2. The mounting according to claim 1, ***characterized in that*** the suction element (3) has at least one suction cup (5, 6).

3. The mounting according to one of the claims 1 or 2, ***characterized in that*** the friction element (4) has at least one needle (26).

4. The mounting according to claim 2, ***characterized in that*** a rubber element (7, 8) is disposed between a suction cup (5, 6) of the suction element (3) and the telescopic rod (2).

5. The mounting according to claim 2, ***characterized in that*** a connection rod (9) is disposed between a suction cup (5, 6) of the suction element (3) and the telescopic rod (2).

6. The mounting according to claim 5, ***characterized in that*** the connection rod (9) is disposed rotatably on the telescopic rod (2).

7. The mounting according to one of the afore-mentioned claims, ***characterized in that*** the telescopic rod (2) has locking device (20) for limiting its length.

8. The mounting according to one of the afore-mentioned claims, ***characterized in that*** a rubber element (23) is disposed between the telescopic rod (2) and the friction element (4).

9. The mounting according to one of the afore-mentioned claims, ***characterized in that*** the friction element (4) has a finger protection (27) disposed in front of needles (26).

10. The mounting according to claim 9, ***characterized in that*** the position of the finger protection (27) relative to the needles (26) is changeable.

## Revendications

1. Fixation (1), notamment destinée à être montée dans un véhicule automobile, avec un bras de support, à l'une des extrémités duquel est disposé un élément de succion (3) et à l'autre extrémité duquel est disposé un élément de friction (4), ***caractérisée en ce que*** le bras de support est conformé en forme de tige télescopique (2) qui comporte au moins un ressort à gaz (14).

2. Fixation selon la revendication 1, ***caractérisée en ce que*** l'élément de succion (3) comporte au moins une ventouse (5, 6).

3. Fixation selon l'une des revendications 1 ou 2, ***caractérisée en ce que*** l'élément de friction (4) comporte au moins une aiguille (26).

4. Fixation selon la revendication 2, ***caractérisée en ce qu'**un* élément en caoutchouc (7, 8) est disposé entre une ventouse (5, 6) de l'élément de succion (3) et la tige télescopique (2).

5. Fixation selon la revendication 2, ***caractérisée en ce qu'**une* tige de raccordement (9) est disposée entre une ventouse (5, 6) de l'élément de succion (3) et la tige télescopique (2).

6. Fixation selon la revendication 5, ***caractérisée en ce que*** la tige de raccordement (9) est montée libre en rotation sur la tige télescopique (2).

7. Fixation selon l'une quelconque des revendications précédentes, ***caractérisée en ce que*** la tige télescopique (2) comporte un dispositif de verrouillage (20) afin de limiter sa longueur.

8. Fixation selon l'une quelconque des revendications précédentes, ***caractérisée en ce qu'**un* élément en caoutchouc (23) est disposé entre la tige télescopique (2) et l'élément de friction (4).

9. Fixation selon l'une quelconque des revendications précédentes, ***caractérisée en ce que*** l'élément de friction (4) comporte un protège-doigts (27) disposé en amont des aiguilles (26).

10. Fixation selon la revendication 9, ***caractérisée en ce que*** la position du protège-doigts (27) par rapport aux aiguilles (26) est modifiable.
